# EUROPÄISCHE PATENTSCHRIFT

(11) **EP 1 282 782 B1**
(45) Veröffentlichungstag und Bekanntmachung des Hinweises auf die Patenterteilung: **15.09.2004**
(21) Anmeldenummer: 01907470.7
(22) Anmeldetag: 19.01.2001
(51) Int. Cl.: F16B 13/12

(54) **SPREIZDÜBEL**
EXPANSION ANCHOR
CHEVILLE A EXPANSION

(30) Priorität: 09.03.2000 DE 10011565
(43) Veröffentlichungstag der Anmeldung: 12.02.2003
(73) Patentinhaber: fischerwerke Artur Fischer GmbH & Co. KG, 72178 Waldachtal (DE)
(72) Erfinder: FISCHER, Rainer, 72178 Waldachtal (DE); HAUG, Willi, 72250 Freudenstadt-Musbach (DE)
(86) Internationale Anmeldenummer: PCT/EP2001/000597
(87) Internationale Veröffentlichungsnummer: WO 2001/066962

(56) Entgegenhaltungen:
- EP-A- 1 026 413
- DE-A- 3 609 562
- DE-A- 19 707 604
- DE-C- 193 478
- US-A- 5 779 410

## Beschreibung

Die Erfindung betrifft einen Spreizdübel mit den Merkmalen des Oberbegriffs des Anspruchs 1.

Derartige Spreizdübel sind an sich bekannt siehe z.B. DE-C-193 478. Sie weisen eine Dübelhülse auf, in die eine Spreizschraube einschraubbar ist, wobei die Spreizschraube die Dübelhülse beim Einschrauben aufweitet. Üblicherweise weist die Dübelhülse Längsschlitze oder in einem Winkel zur Längsrichtung verlaufende Schlitze auf, die die Dübelhülse in Spreizzungen unterteilt, die durch Einschrauben der Spreizschraube aufgespreizt werden. Eine weitere Möglichkeit ist, die Dübelhülse aus einem elastisch und/oder plastisch aufweitbaren Material, insbesondere aus einem Kunststoff, herzustellen. Durch das Aufweiten bzw. Aufspreizen werden die Spreizdübel in einem Bohrloch, beispielsweise in einem Mauerwerk verankert.

Die bekannten Spreizdübel haben den Nachteil, dass sie sich bei einer Bohrlocherweiterung beispielsweise durch Rissbildung im Mauerwerk lockern, ihre Verankerungs- oder Ausziehkraft nimmt ab.

Der Erfindung liegt die Aufgabe zugrunde, einen Spreizdübel der eingangs genannten Art so auszubilden, dass er bei einer Bohrlocherweiterung eine hohe Verankerungsoder Ausziehkraft aufweist.

Diese Aufgabe wird erfindungsgemäß durch die Merkmale des Anspruchs 1 gelöst. Die Spreizschraube des erfindungsgemäßen Spreizdübels weist ein Schraubengewinde auf, dessen in Einschraubrichtung hintere Flanke flach in einem Winkel von ca. 45° oder weniger zu einer Achsrichtung der Spreizschraube verläuft. Die in Einschraubrichtung hintere Flanke des Schraubengewindes bildet eine Schräg- oder Spreizfläche, die bei einer axialen Belastung der Spreizschraube in einer Ausziehrichtung die Dübelhülse zusätzlich aufweitet oder aufspreizt. Das Schraubengewinde bildet einen kegelartigen Spreizkörper. Weitet sich ein Bohrloch, in welchem der erfindungsgemäße Spreizdübel verankert ist, auf, so wird - bei einer Belastung der Spreizschraube in axialer Richtung - die Spreizschraube ein kurzes Stück in axialer Richtung aus der Dübelhülse herausgezogen. Dabei spreizt die in einem flachen Winkel von ca. 45° oder weniger zur Achsrichtung stehende, in Einschraubrichtung hintere Flanke des Schraubengewindes die Dübelhülse weiter auf, der Spreizdübel wird nachgespreizt und bleibt mit näherungsweise unveränderter Verankerungskraft im Bohrloch verankert.

Der erfindungsgemäße Spreizdübel hat den Vorteil, dass er ein Nachspreizverhalten aufweist und damit zugzonentauglich ist. Weiterer Vorteil ist eine hohe Verankerungskraft in einem auch nicht erweiterten Bohrloch sowie ein günstiges Verhältnis zwischen einem zum Aufspreizen der Dübelhülse notwendigen Einschraubmoment der Spreizschraube zur Verankerungskraft des Spreizdübels im Bohrloch.

Des Weiteren weist die Spreizschraube des erfindungsgemäßen Spreizdübels einen über eine Länge ihres Schraubengewindes von vom nach hinten zunehmenden Kemdurchmesser auf. Der Kemdurchmesser kann gestuft oder stufenlos zunehmen. Der nach hinten hin zunehmende Kemdurchmesser hat den Vorteil, dass das Schraubengewinde in einem hinteren Bereich eine größere Querbelastung (Biege- und Scherbeanspruchung) aufnehmen kann. Die Spreizschraube ist dadurch in der Lage, eine größere, an ihrem hinteren Ende angehängte und die Spreizschraube quer beanspruchende Last zu tragen. Zudem ist selbstverständlich auch eine größere Zugbelastung der Spreizschraube möglich, die sich über die Länge ihres Schraubengewindes nach vorn hin abbaut. Des Weiteren ist es möglich, das Schraubengewinde bis nahe an ein hinteres Ende der Spreizschraube auszubilden, ohne durch eine Querschnittsverringerung und eine Kerbwirkung des Schraubengewindes die Beanspruchbarkeit des Schraubengewindes stark herabzusetzen. Dies hat den Vorteil, dass die Dübethülse bereits nahe einer Oberfläche beispielsweise eines Mauerwerks, in welchem der erfindungsgemäße Spreizdübel verankert ist, mit der Spreizschraube auf- und nachspreizbar ist.

Das Schraubengewinde weist ein Sägezahnprofil auf, dessen flachere und längere Flanke, die die Spreizfläche bildet, in Einschraubrichtung der Spreizschraube nach hinten weist. Diese Ausgestaltung der Erfindung weist ein gutes Einschraubverhalten der Spreizschraube in die Dübelhülse auf. Weiterer Vorteil ist eine große, von der in Einschraubrichtung hinteren Gewindeflanke gebildeten Spreizfläche im Verhältnis zu einer axialen Länge des Schraubengewindes.

In bevorzugter Ausgestaltung der Erfindung entspricht der Kemdurchmesser am hinteren Ende des Schraubengewindes in etwa einem Durchmesser eines gewindelosen Schraubenschafts, der sich an das hintere Ende des Schraubengewindes anschließt. Dadurch wird ein im Wesentlichen stufenloser Übergang vom Schraubengewinde in den Schraubenschaft erreicht. Eine Querschnittsschwächung oder Kerbwirkung am Übergang vom Schraubengewinde zum Schraubenschaft werden bei dieser Ausgestaltung der Erfindung weitgehend vermieden. Dies ist insbesondere deswegen von Vorteil, weil sich der Übergang vom Schraubengewinde zum Schraubenschaft üblicherweise nahe einer Oberfläche, beispielsweise eines Mauerwerks, befindet, in dem der Spreizdübel verankert ist. An der Oberfläche des Mauerwerks ist eine Querbeanspruchung der Spreizschraube am höchsten.

Bei einer Ausgestaltung der Erfindung beträgt der Winkel, in welchem die in Einschraubrichtung hintere Flanke des Schraubengewindes verläuft, an einem vorderen Ende des Schraubengewindes etwa 28°. Dies ergibt einen Kegelwinkel von ungefähr 56°, wobei mit Kegelwinkel der Winkel der in Einschraubrichtung hinteren Flanke an einander gegenüberliegenden Stellen des Schraubengewindes gemeint ist. Der Winkel, in welchem die in Einschraubrichtung hintere Flanke des Schraubengewindes verläuft, nimmt zum hinteren Ende des Schraubengewindes auf etwa 7° ab, was einem Kegelwinkel von etwa 14° entspricht. Die genannten Winkel ergeben ein günstiges Verhältnis zwischen einer auf die Spreizschraube ausgeübten axialen Kraft in Ausziehrichtung und einer durch diese Kraft von der Spreizschraube auf die Dübelhülse ausgeübten Spreizkraft.

Wird die Spreizschraube in Verbindung mit einer aus einem härteren Kunststoff hergestellten Dübelhülse verwendet, ist es vorteilhaft, die flachere und längere Gewindeflanke des Schraubengewindes konkav auszubilden. Damit wird der Spitzenwinkel des Gewindes etwas kleiner, so dass sich das Gewinde leichter in das Material einschneidet. Ferner wird der Auslauf der Gewindeflanke durch die konkave Ausbildung flacher, was die Reibung am Anfang der Axialverschiebung der Spreizschraube in der Dübelhülse zum Nachspreizen des Spreizdübels vermindert und erst bei fortschreitender Axialverschiebung erhöht. Dadurch wird ein Nachspreizverhalten erreicht, bei der die Spreizkraft des Spreizdübels progressiv mit der Axialverschiebung zunimmt. Weiterer Vorteil einer konkaven, in Einschraubrichtung hinteren Flanke des Schraubengewindes ist eine verringerte Kerbwirkung durch den am Gewindegrund kleineren Flankenwinkel.

Um eine für das Aufweiten und Nachspreizen der Dübelhülse notwendige axiale Beweglichkeit der Spreizschraube zu schaffen weist die Dübelhülse bei einer Ausgestaltung der Erfindung eine Dehn- und/oder Solltrennstelle auf, die eine axiale Dehnung der Dübelhülse oder eine Trennung der Dübelhülse in zwei Teile bei einer Axialbelastung der Dübelhülse ermöglicht. Wird die Dübelhülse des erfindungsgemäßen Spreizdübels axial belastet, so dehnt sie sich in axialer Richtung oder sie wird in zwei Teile getrennt. Bei einer axialen Belastung bewegt sich ein hinterer Teil der Dübelhülse zusammen mit der einliegenden Spreizschraube ein kurzes Stück axial weg von einem vorderen, im Mauerwerk verankerten Teil der Dübelhülse. Durch diese Verschiebung weitet die Spreizschraube wie oben beschrieben die Dübelhülse in ihrem vorderen Bereich auf und verankert dadurch den Spreizdübel im Bohrloch. Die beschriebene Axialbewegung des hinteren Teils der Dübelhülse gemeinsam mit der einliegenden Spreizschraube gegenüber dem vorderen, im Mauerwerk verankerten Teil der Dübelhülse findet auch bei einer Bohriocherweiterung beispielsweise in Folge von Rissbildung im Mauerwerk statt, so dass der erfindungsgemäße Spreizdübel bei einer Bohrlocherweiterung nachspreizt. Durch dieses Nachspreizen bleibt wie bereits erwähnt die Verankerungs- oder Ausziehkraft des erfindungsgemäßen Spreizdübels bei einer Bohrlocherweiterung näherungsweise unverändert.

Dehn- und/oder Solltrennstelle sind nicht notwendigerweise Alternativen, es kann sich auch um ein und dasselbe handeln. Die Dehn- und/oder Solltrennstelle kann bei axialer Belastung des Spreizdübels zunächst eine axiale Dehnung der Dübelhülse ermöglichen. Steigt die axiale Belastung an, trennt sich die Dübelhülse an der Dehn- und/oder Solltrennstelle in zwei Teile. Die Dehn- und/oder Solltrennstelle lässt sich beispielsweise durch eine Verringerung der Wandstärke der Dübelhülse, das Vorsehen einer umlaufenden oder auch einer wendelförmig verlaufenden Nut an der Dübelhülse ausbilden.

Die Ausbildung einer Dehn- und/oder Solltrennstelle an der Dübelhülse des erfindungsgemäßen Spreizdübels hat insbesondere den Vorteil, dass der Spreizdübel mit bereits in der Dübelhülse einliegender Spreizschraube in ein Bohrloch eingebracht, beispielsweise eingeschlagen werden kann. Es ist nicht notwendig, zunächst die Dübelhülse ohne die Spreizschraube in das Bohrloch einzubringen und anschließend die Spreizschraube einzuschrauben, der Vorgang des Einschraubens der Spreizschraube kann entfallen. Die Spreizschraube weitet und/oder spreizt die Spreizhülse bei einer axialen Belastung in Ausziehrichtung auf, so dass der erfindungsgemäße Spreizdübel durch die Belastung im Bohrloch verankert wird. Ein Aufspreizen der Spreizhülse durch Einschrauben der Spreizschraube erübrigt sich. Erforderlichenfalls kann die in der Dübelhülse einliegende Spreizschraube nach dem Einbringen des Spreizdübels in das Bohrloch kurz angezogen werden, um ein Aufweiten und/oder Aufspreizen der Dübelhülse und dadurch eine Verankerung des Spreizdübels im Mauerwerk auch ohne Belastung des Spreizdübels zu bewirken.

Durch die Möglichkeit, den erfindungsgemäßen Spreizdübel mit in der Dübelhülse einliegender Spreizschraube ohne Einschrauben der Spreizschraube in ein Bohrloch einzubringen vereinfacht und verkürzt sich die Verankerung des erfindungsgemäßen Spreizdübels. Hinzu kommt der Vorteil, dass die Spreizschraube bei der Herstellung der Dübelhülse beispielsweise durch Spritzgießen aus Kunststoff als Kern verwendet werden kann. Die Spreizschraube wird als Kern in ein Spritzgießwerkzeug eingelegt und anschließend mit dem die Dübelhülse bildenden Kunststoff umspritzt. Dadurch entfällt ein separater Kern ebenso wie das Ausdrehen eines solchen separaten Kems aus der Dübelhülse nach dem Spritzgießen und das Eindrehen der Spreizschraube in die Dübelhülse. Der Spreizdübel mit der Spreizschraube, um die die Dübelhülse gespritzt ist, ist nach einem Entformen sofort verwendungsfähig. Ein vor dem Spritzgießen der Dübelhülse auf die Spreizschraube aufgebrachtes Trennmittel wirkt als Gleitbeschichtung, die eine leichtgängige Axialverschieblichkeit der Spreizschraube in der Dübelhülse sicherstellt und dadurch ein gutes Verhältnis von Aufspretzkraft zu Axialbelastung gewährleistet.

In bevorzugter Ausgestaltung weicht die Dübelhülse in einem Spreizbereich von beispielsweise einer Zylinderform mit gedachter, gerader Achse ab, die Dübelhülse weist zumindest im Spreizbereich beispielsweise eine Wellung in Längsrichtung oder eine Wendelform auf. Allgemeiner ausgedrückt verläuft eine Oberfläche der Dübelhülse im Spreizbereich in Längsrichtung in einem Winkel zu einer gedachten Zylinderfläche bzw. zu einer Dübellängsachse. Dabei ändert sich der Winkel, in welchem die Oberfläche der Dübelhülse zur Längsachse des Spreizdübels verläuft, über die Länge der Dübelhülse.

Zweck dieser Ausgestaltung der Erfindung ist, die Dübelhülse im Spreizbereich in einer Querrichtung verformbar auszubilden. Beim Eintreiben in ein Bohrloch wird die Dübelhülse im Sinne einer Begradigung verformt, es werden beispielsweise bei gewellter Ausführung der Dübelhülse Wellenberge radial nach innen gedrückt. Die Dübelhülse liegt dadurch mit einer Vorspannung im Bohrloch an.

Die Erfindung wird nachfolgend anhand eines in der Zeichnung dargestellten Ausführungsbeispiels näher erläutert. Es zeigen:
- Figur 1: einen Spreizdübel gemäß der Erfindung in Seitenansicht;
- Figur 2: eine Dübelhülse des Spreizdübels aus Figur 1 in perspektivischer Darstellung;
- Figur 3: die Dübelhülse aus Figur 2 im Achsschnitt;
- Figur 4: eine Spreizschraube des Spreizdübels aus Figur 1 in Seitenansicht;
- Figuren 4a-d: vergrößerte Darstellungen von Abschnitten eines Schraubengewindes der Spreizschraube aus Figur 4; und
- Figur 5: die Verwendung des Spreizdübels aus Figur 1 in Achsschnittdarstellung.

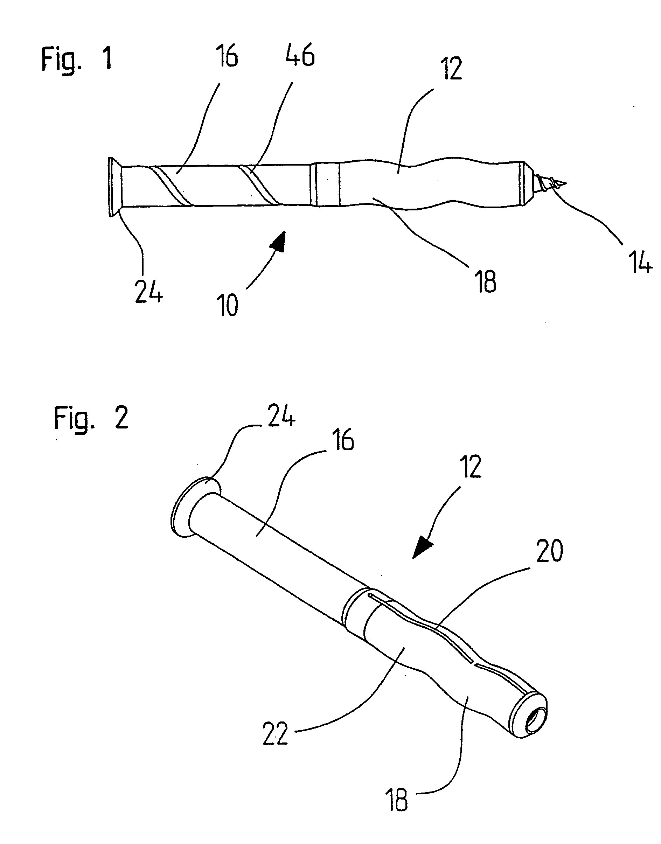

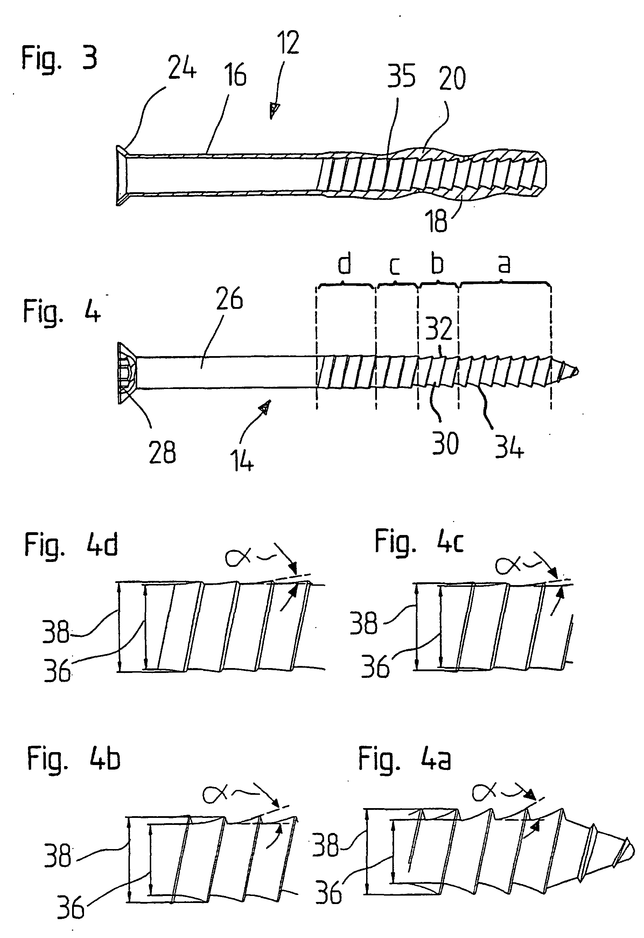

Der in Figur 1 dargestellte, erfindungsgemäße Spreizdübel 10 weist eine aus Kunststoff hergestellte Dübelhülse 12, wie sie in Figuren 2 und 3 dargestellt ist, und eine Spreizschraube 14, die in der Dübelhülse 12 einliegt und in Figur 4 dargestellt ist, auf. Die Spreizschraube 14 besteht aus Metall, insbesondere aus Stahl.

Die Dübelhülse 12 weist eine näherungsweise hohlzylindrische Form mit einem hohlzylindrischen Schaft 16 auf, der einen hinteren Teil der Dübelhülse 12 einnimmt. Ein vorderer Teil 18 der Dübelhülse 12 weist eine von einer Zylinderform abweichende Form auf, der vordere Teil 18 weist eine in Längsrichtung des Spreizdübels 10 verlaufende Wellung auf. Dieser vordere Teil 18 der Dübelhülse 12 bildet einen Spreizbereich 18 der Dübelhülse 12. Der Spreizbereich 18 der Dübelhülse 12 ist mit unterbrochenen Längsschlitzen 20 versehen, die den Spreizbereich 18 in Spreizschenkel 22 unterteilt. Bei der Herstellung der Dübelhülse 12 aus einem dehnbaren Material wie Kunststoff sind die Längsschlitze 20 nicht zwingend erforderlich, da eine ausreichende Aufweitbarkeit des Spreizbereichs 18 durch die Dehnbarkeit des Materials der Dübelhülse 12 gegeben ist.

Der Schaft 16, der den hinteren Teil der Dübelhülse 12 bildet, weist eine sich wendelförmig um den Schaft 16 windende Nut 46 auf, die eine Dehn- und/oder Solltrennstelle 46 bildet. Die die Dehn- und/oder Solltrennstelle 46 bildende Nut ermöglicht durch eine Verringerung der Wandstärke des Schafts 16 am Grund der Nut 46 eine axiale Dehnbarkeit des Schafts 16. Bei größerer axialer Belastung kann der Schaft 16 der Dübelhülse 12 auch an der Nut 46 einreißen.

Der Schaft 16 weist am hinteren Ende der Dübelhülse 12 einen hohlkegelförmigen Bund 24 auf.

Die Spreizschraube 14 des Spreizdübels 10 weist einen zylinderförmigen, glattwandigen Schaft 26 auf, dessen Länge in etwa einer Länge des Schafts 16 der Dübelhülse 12 entspricht. An einem hinteren Ende weist die Spreizschraube 14 einen kegelstumpfförmigen Schraubenkopf 28 auf. An einem vorderen Ende schließt sich einstückig ein Schraubengewinde 30 an den Schaft 26 der Spreizschraube 14 an, das eine in etwa mit der Länge des Spreizbereichs 18 der Dübelhülse 12 übereinstimmende Länge aufweist. Das Schraubengewinde 30 läuft an einem vorderen Ende der Spreizschraube 14 spitz aus.

Das Schraubengewinde 30 weist ein sägezahnförmiges Profil auf, eine in Einschraubrichtung hintere Flanke 32 des Schraubengewindes 30 verläuft in einem flachen Winkel und eine in Einschraubrichtung vordere Flanke 34 des Schraubengewindes 30 verläuft in einem steilen Winkel zu einer Achsrichtung der Spreizschraube 14. Ein Kemdurchmesser des Schraubengewindes 30 ändert sich über dessen Länge, der Kerndurchmesser nimmt von vorn nach hinten zu. Dabei kann der Kemdurchmesser des Schraubengewindes 30 stufenlos von vom nach hinten zunehmen. Im dargestellten Ausführungsbeispiel ist das Schraubengewinde 30 von vorn nach hinten in vier axiale Abschnitte a - d unterteilt, wobei innerhalb dieser Abschnitte a - d Abmessungen des Schraubengewindes gleich sind und sich von Abschnitt zu Abschnitt ändem. Die Abschnitte a - d des Schraubengewindes 30 sind in den korrespondierenden Figuren 4a - d in Vergrößerung dargestellt. Im dargestellten Ausführungsbeispiel weist der Schaft 26 einen Durchmesser von 7 mm auf. Ein Kerndurchmesser 36 des Schraubengewindes 30 ist im Abschnitt a 5,2 mm, im Abschnitt b 5,9 mm, im Abschnitt c 6,9 mm und im letzten Abschnitt d 7,2 mm. Dies bedeutet, dass der Kemdurchmesser 36 des Schraubengewindes 30 am Übergang zum glattwandigen Schaft 26 in etwa so groß wie der Durchmesser des Schafts 26 ist, so dass das Schraubengewinde 30 stufenlos in den Schaft 26 übergeht.

Ein Außendurchmesser 38 des Schraubengewindes 30 beträgt im dargestellten Ausführungsbeispiel der Spreizschraube 14 in den Abschnitten a und b 7,2 mm, im Abschnitt c 7,4 mm und im Abschnitt d 7,7 mm. Ein Winkel α zwischen der in Einschraubrichtung hinteren Flanke 32 des Schraubengewindes 30 und einer Achsrichtung beträgt im dargestellten Ausführungsbeispiel der Spreizschraube 14 im Abschnitt a ca. 28° im Abschnitt b ca. 20° und in den Abschnitten c und d ca. 7°. Die hintere Flanke 32 ist in Längsrichtung der Spreizschraube 14 konkav gewölbt, wie insbesondere in Figuren 4a und b gut sichtbar.

Die in Einschraubrichtung vordere Flanke 34 des Schraubengewindes 30 ist steil ausgerichtet, sie bewirkt einen Formschluss in axialer Richtung zwischen der Spreizschraube 14 und der Dübelhülse 12, so dass die Spreizschraube 14 eine Schlagenergie beim Einschlagen des Spreizdübels 10 in ein Bohrloch auf die Dübelhülse 12 überträgt. Dadurch wird vermieden, dass beim Einschlagen des Spreizdübels 10 die Dübelhülse 12 axial gestaucht wird.

Bei der Herstellung der Spreizhülse 12 des Spreizdübels 10 beispielsweise durch Spritzgießen aus Kunststoff kann die Spreizschraube 14 als Kern in eine Kavität eines nicht dargestellten Spritzgießwerkzeugs eingelegt sein und mit dem die Dübelhülse 12 bildenden Kunststoff umspritzt werden. Ein vor dem Spritzgießen auf die Spreizschraube 14 aufgebrachtes Trennmittel bildet eine Gleitbeschichtung, die ein Haften der Dübelhülse 12 auf der Spreizschraube 14 verhindert und eine Beweglichkeit der Spreizschraube 14 in der Dübelhülse 12 sicher stellt.

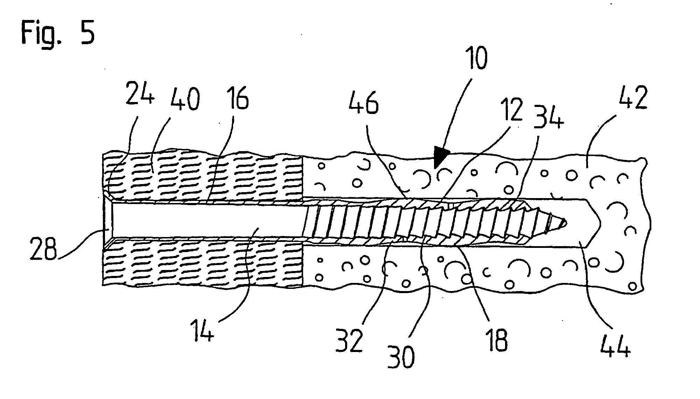

In Figur 5 ist eine Verwendung des Spreizdübels 10 zur Befestigung eines Bauteils, beispielsweise eines Holzstücks 40 an einem Mauerwerk 42 dargestellt. Der Spreizdübel 10 wird mit der in der Dübelhülse 12 einliegenden Spreizschraube 14 durch ein Loch im Holzteil 40 durchgesteckt und in ein Bohrloch 44 im Mauerwerk 42 eingeschlagen. Die steil stehende in Einschraubrichtung vordere Flanke 34 des Schraubgewindes 30 bewirkt einen Formschluss in axialer Richtung zwischen der Spreizschraube 14 und der Dübelhülse 12, der eine Schlagenergie beim Einschlagen des Spreizdübels 10 in das Bohrloch 40 auf die Dübelhülse 12 überträgt. Beim Eintreiben in das Bohrloch 44 verformt sich der die Wellung aufweisende Spreizbereich 18 der Dübelhülse 12, es werden Wellenberge 46 der Wellung von der Wandung des Bohrlochs 44 radial nach innen gedrückt. Diese Verformung des Spreizbereichs 18 bewirkt eine Vorspannung, mit der der Spreizdübel 10 im Bohrloch 44 einliegt.

Die in einem flachen Winkel zur Achsrichtung der Spreizschraube 14 verlaufende hintere Flanke 32 des Schraubengewindes 30 bildet eine Schräg- oder Spreizfläche, die die Dübelhülse 12 im Spreizbereich 18 radial aufweitet bzw. aufspreizt, wenn die Spreizschraube 14 axial in Richtung eines hinteren Endes des Spreizübels 10 bezüglich der Dübelhülse 12 bewegt wird. Eine solche axiale Bewegung der Spreizschraube 14 in Bezug auf die Dübelhülse 12 erfolgt bei einer axialen Belastung des Spreizdübels 10. Eine solche axiale Belastung wirkt als Zugkraft, die vom Holzstück 40 auf den Bund 24 der Dübelhülse 12 und von diesem auf den Kopf 28 der Spreizschraube 14 ausgeübt wird. Eine solche Zugkraft bewirkt eine axiale Verlängerung des mit der wendelförmigen Nut 46 (Dehn- und/oder Solltrennstelle) versehenen Schafts 16 der Dübelhülse 12 und dadurch eine axiale Verschiebung des Schraubgewindes 30 der Spreizschraube 14 im Spreizbereich 18 der Spreizhülse 12. Die flach stehende hintere Flanke 32 des Schraubengewindes 30 weitet bei dieser Axialbewegung der Spreizschraube 14 den Spreizbereich 18 der Dübelhülse 12 auf, wodurch der Spreizdübel 10 mit hoher Verankerungskraft im Bohrloch 44 im Mauerwerk 42 verankert ist. Die Axialbewegung der Spreizschraube 14 in der Dübelhülse 12 beträgt einen Bruchteil der Höhe eines Ganges des Schraubengewindes 30 in axialer Richtung. Die bereits vor dem Einschlagen des Spreizdübels 10 in das Bohrloch 44 in der Dübelhülse 12 einliegende Spreizschraube 14 braucht zum Aufspreizen der Dübelhülse 12 und damit zur Verankerung des Spreizdübels 10 im Mauerwerk 42 nicht in die Dübelhülse 12 eingeschraubt werden, die Befestigung des Holzteils 40 am Mauerwerk 42 kann ausschließlich durch Einschlagen des Spreizdübels 10 mit der in der Dübelhülse 12 einliegenden Spreizschraube 14 erfolgen.

Erweitert sich das Bohrloch 44 beispielsweise in Folge einer Rissbildung im Mauerwerk 42, so wird bei einer axialen Belastung des Spreizdübels 10 die Spreizschraube 14 ein Stück weiter axial in Richtung des hinteren Endes des Spreizdübels 10 in der Dübelhülse 12 bewegt. Dabei spreizt das Schraubengewinde 30 die Dübelhülse 12 im Spreizbereich 18 weiter auf, so dass der Spreizdübel 10 auch bei einer Bohrlocherweiterung mit näherungsweise unveränderter Ausziehkraft im Bohrloch 44 verankert bleibt. Der Spreizdübel 10 weist ein Nachspreizverhalten auf, das ihn zugzonentauglich macht.

Nach dem Einschlagen des Spreizdübels 10 in das Mauerwerk 44 kann die Spreizschraube 14 auch kurz angezogen werden, um den Spreizbereich 18 der Dübelhülse 12 aufzuspreizen und dadurch den Spreizdübel 10 im Mauerwerk 42 ohne axiale Bewegung der Spreizschraube 14 zu verankern. Prinzipiell ist es auch möglich, den Spreizdübel 10 ohne Spreizschraube 14 in das Bohrloch 44 einzubringen und die Spreizschraube 14 zum Aufspreizen des Spreizbereichs 18 der Dübelhülse 12 und damit zur Verankerung des Spreizdübels 10 im Mauerwerk 42 einzuschrauben.

In Verbindung mit der erfindungsgemäßen Spreizschraube 14 können auch andere als die dargestellte Ausführungsform der Dübelhülse 12 verwendet werden. So ist es bspw. möglich, den Spreizbereich 18 der Dübelhülse 12 zylindrisch mit umlaufenden Nuten zumindest über ein Teilstück des Spreizbereichs 18 auszubilden.

## Patentansprüche

1. Spreizdübel (10) mit einer aufweitbaren Dübelhülse (12) und mit einer Spreizschraube (14) zum Aufspreizen der Dübelhülse (12), wobei die Spreizschraube (14) ein Schraubengewinde (30) mit sägezahnförmigem Profil aufweist, dessen steilere und kürzere Flanke (34) in Einschraubrichtung der Spreizschraube (14) vom und dessen flachere und längere Flanke (32) in Einschraubrichtung der Spreizschraube (14) hinten angeordnet ist und einen flachen Winkel α von etwa 45° oder weniger zu einer Achsrichtung der Spreizschraube (14) aufweist, und wobei das Schraubengewinde (30) einen über eine Länge des Schraubengewindes (30) von vom nach hinten zunehmenden Kemdurchmesser (36) aufweist, **dadurch gekennzeichnet, dass** die Dübelhülse (12) aus Kunststoff besteht, und dass das Schraubengewinde (30) mit der Dübelhülse (12) in Eingriff steht.

2. Spreizdübel nach Anspruch 1, **dadurch gekennzeichnet, dass** der Kemdurchmesser (36) des Schraubengewindes (30) an einem hinteren Ende des Schraubengewindes (30) in etwa einem Durchmesser eines Schafts (26) der Spreizschraube (14) entspricht, der sich an das hintere Ende des Schraubengewindes (30) anschließt.

3. Spreizdübel nach Anspruch 1, **dadurch gekennzeichnet, dass** die in Einschraubrichtung hintere Flanke (32) des Schraubengewindes (30) einen sich von etwa 28° an einem vorderen Ende des Schraubengewindes (30) auf etwa 7° an einem hinteren Ende des Schraubengewindes (30) abflachenden Winkel α zur Achsrichtung der Spreizschraube (14) aufweist.

4. Spreizdübel nach Anspruch 1, **dadurch gekennzeichnet, dass** die in Einschraubrichtung hintere Flanke (32) des Schraubengewindes (30) in Längsrichtung der Spreizschraube (14) konkav ist.

5. Spreizdübel nach Anspruch 1, **dadurch gekennzeichnet, dass** die Dübelhülse (12) eine Dehn- und/oder Solltrennstelle (46) aufweist, die eine axiale Dehnung und/oder eine Trennung der Dübelhülse (12) in zwei Teile ermöglicht.

6. Spreizdübel nach Anspruch 1, **dadurch gekennzeichnet, dass** die Dübelhülse (12) in einem Spreizbereich (18) eine in Längsrichtung unebene Form aufweist, deren Oberfläche in Längsrichtung in einem Winkel zu einer Achsrichtung der Dübelhülse (12) verläuft, wobei sich der Winkel über die Länge des Spreizbereichs (18) ändert.

7. Spreizdübel nach Anspruch 6, **dadurch gekennzeichnet, dass** die Dübelhülse (12) im Spreizbereich (18) eine Wellung in Längsrichtung aufweist.

8. Spreizdübel nach Anspruch 6, **dadurch gekennzeichnet, dass** die Dübelhülse (12) im Spreizbereich (18) eine Wendelform aufweist.

## Claims

1. Expansible fixing plug (10) having an expansible fixing plug sleeve (12) and having an expansion screw (14) for expanding the fixing plug sleeve (12), wherein the expansion screw (14) has a screw thread (30) with a saw-tooth profile, the steeper and shorter flank (34) of the screw thread (30) being arranged at the front in the screwing-in direction of the expansion screw (14) and the shallower and longer flank (32) of the screw thread being arranged at the rear in the screwing-in direction of the expansion screw (14), and having a shallow angle α of about 45° or less to the axial direction of the expansion screw (14), and wherein the screw thread (30) has a core diameter (36) that increases over the length of the screw thread (30) from the front to the rear, **characterized in that** the fixing plug sleeve (12) consists of plastics material and **in that** the screw thread (30) is in engagement with the fixing plug sleeve (12).

2. Expansible fixing plug according to claim 1, **characterized in that** the core diameter (36) of the screw thread (30) at the rear end of the screw thread (30) corresponds approximately to the diameter of a shank (26) of the expansion screw (14) adjoining the rear end of the screw thread (30).

3. Expansible fixing plug according to claim 1, **characterized in that** the flank (32) of the screw thread (30) at the rear in the screwing-in direction has an angle α to the axial direction of the expansion screw (14) that declines from about 28° at the leading end of the screw thread (30) to about 7° at the rear end of the screw thread (30).

4. Expansible fixing plug according to claim 1, **characterised in that** the flank (32) of the screw thread (30) at the rear in the screwing-in direction is concave in the lengthwise direction of the expansion screw (14).

5. Expansible fixing plug according to claim 1, **characterised in that** the fixing plug sleeve (12) has a yield and/or rupture point (46), which enables the fixing plug sleeve (12) to elongate axially or to separate into two parts.

6. Expansible fixing plug according to claim 1, **characterised in that** in an expansion region (18) the fixing plug sleeve (12) has an uneven form in the lengthwise direction, the surface of which in the lengthwise direction runs at an angle tothe axial direction of the fixing plug sleeve (12), the angle changing over the length of the expansion region (18).

7. Expansible fixing plug according to claim 6, **characterised in that** in the region (18) the fixing plug sleeve (12) has an undulation in the lengthwise direction.

8. Expansible fixing plug according to claim 6, **characterised in that** in the expansion region (18) the fixing plug sleeve (12) has a helical form.

## Revendications

1. Cheville à expansion (10) comprenant une gaine de cheville (12) élargissable et une vis d'expansion (14) destinée à l'écartement de la gaine de cheville (12), la vis d'expansion (14) comprenant un filet de vis (30) présentant un profil en dents de scie dont le flanc plus escarpé et plus court (34) est disposé dans la direction de vissage devant la vis d'expansion (14) et dont le flanc plus plat et plus long (32) est disposé dans la direction de vissage derrière la vis d'expansion (14) et comprend un angle plat α de sensiblement 45° ou moins par rapport à une direction d'axe de la vis d'expansion (14), et le filet de vis (30) présentant un diamètre du noyau (36) croissant de l'avant vers l'arrière sur une longueur du filet de vis (30), **caractérisée en ce que** la gaine de cheville (12) est constituée de plastique, et **en ce que** le filet de vis (30) est en prise avec la gaine de cheville (12).

2. Cheville à expansion selon la revendication 1, **caractérisée en ce que** le diamètre du noyau (36) du filet de vis (30) sur une extrémité arrière du filet de vis (30) correspond sensiblement à un diamètre d'une tige (26) de la vis d'expansion (14), laquelle tige se raccorde à l'extrémité arrière du filet de vis (30).

3. Cheville à expansion selon la revendication 1, **caractérisée en ce que** le flanc arrière (32) du filet de vis (30) dans la direction de vissage comprend un angle α s'aplatissant de sensiblement 28° sur une extrémité avant du filet de vis (30) à sensiblement 7° sur une extrémité arrière du filet de vis (30) par rapport à la direction d'axe de la vis d'expansion (14).

4. Cheville à expansion selon la revendication 1, **caractérisée en ce que** le flanc arrière (32) du filet de vis (30) dans la direction de vissage est concave dans la direction longitudinale de la vis d'expansion (14).

5. Cheville à expansion selon la revendication 1, **caractérisée en ce que** la gaine de cheville (12) présente un point d'extension et/ou destiné à la rupture (46), qui permet une extension axiale et/ou une rupture de la gaine de cheville (12) en deux parties.

6. Cheville à expansion selon la revendication 1, **caractérisée en ce que** la gaine de cheville (12) présente dans une zone d'expansion (18) une forme inégale en direction longitudinale, dont la surface s'étend en direction longitudinale sur un angle par rapport à une direction d'axe de la gaine de cheville (12), l'angle étant modifié par la longueur de la zone d'expansion (18).

7. Cheville à expansion selon la revendication 6, **caractérisée en ce que** la gaine de cheville (12) présente en direction longitudinale dans la zone d'expansion (18) une ondulation.

8. Cheville à expansion selon la revendication 6, **caractérisée en ce que** la gaine d'expansion (12) présente dans la zone d'expansion (18) une forme hélicoïdale.
